(19) Europäisches Patentamt
European Patent Office
Office européen des brevets

(11) Numéro de publication : **0 354 112 B1**

(12) # FASCICULE DE BREVET EUROPEEN

(45) Date de publication du fascicule du brevet : **19.02.92 Bulletin 92/08**

(51) Int. Cl.[5] : **G01V 1/28,** A61B 5/00, G06F 15/62

(21) Numéro de dépôt : **89402175.7**

(22) Date de dépôt : **31.07.89**

(54) **Méthode pour obtenir un modèle représentatif d'un milieu hétérogène et notamment du sous-sol.**

(30) Priorité : **05.08.88 FR 8810719**

(43) Date de publication de la demande : **07.02.90 Bulletin 90/06**

(45) Mention de la délivrance du brevet : **19.02.92 Bulletin 92/08**

(84) Etats contractants désignés : **DE GB IT NL**

(56) Documents cités :
**US-A- 4 679 174**

(56) Documents cités :
**GEOPHYSICS, vol. 47, no. 5, mai 1982, pages 757-770, Society of Exploration Geophysicists; A. BAMBERGER et al.: "Inversion of normal incidence seismograms"**
**GEOPHYSICAL PROSPECTING, vol. 25, 1977, pages 231-250, La Haye, NL; M. LAVERGNE et al.: "Inversion of seismograms and pseudo velocity logs"**
**PROCEEDINGS OF THE IEEE, vol. 74, no. 3, mars 1986, pages 487-497, IEEE, New York, US; D.W. OLDENBURG et al.: "Inversion of band-limited reflection seismograms: Theory and practice"**

(73) Titulaire : **INSTITUT FRANCAIS DU PETROLE**
**4, Avenue de Bois Préau**
**F-92502 Rueil-Malmaison (FR)**

(72) Inventeur : **Lailly, Patrick**
**123, avenue des Pages**
**F-78110 Le Vesinet (FR)**

EP 0 354 112 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne une méthode pour obtenir un modèle représentatif d'un milieu hétérogène d'après des mesures indirectes obtenues depuis l'extérieur de celui-ci et d'autres données, notamment un ensemble de données ponctuelles mesurées in situ.

La méthode selon l'invention peut convenir dans des domaines très divers selon le type d'émission employé pour obtenir les images. Elle s'applique notamment dans le domaine de la géophysique et en particulier pour le traitement des données sismiques. Pour les besoins de la prospection sismique par réflexion, des ondes sont émises par une source sismique. Elles se propagent dans les terrains à explorer et l'on capte les réflexions de ces ondes sur les discontinuités du sous-sol au moyen d'un ensemble de capteurs sismiques répartis le long de la section de sous-sol à étudier. Les signaux enregistrés en fonction du temps sont généralement échantillonnés sous une forme numérisée. Par un déplacement régulier de la source sismique et de l'ensemble de capteurs et une répétition de cycles d'émission-réception, on enregistre un grand nombre de traces sismiques contenant des informations sur le sous-sol.

Divers traitements sont systématiquement appliqués aux enregistrements par des calculateurs numériques programmés, pour améliorer leur lisibilité. Il s'agit en particulier de sommations de traces d'enregistrement par application de la méthode dite de couverture multiple pour améliorer le rapport du signal au bruit ou bien encore de déconvolutions et de migrations comme il est bien connu des spécialistes, pour améliorer la résolution verticale et la résolution horizontale.

En particulier le traitement en amplitudes préservées permet d'éliminer tous les phénomènes quine sont pas liés à la réflectivité des discontinuités en incidence normale. De cette façon, la section traitée est représentative des interfaces géologiques, les amplitudes des ondes réfléchies étant alors sensiblement proportionnel les aux coefficients de réflexion correspondant aux discontinuités du sous-sol. Après le traitement en amplitudes préservées, l'image sismique contient donc des informations lithologiques.

Les coupes sismiques améliorées que l'on obtient après ces traitements sont alors disponibles pour l'interprétation. Il s'agit de transformer chaque coupe sismique en temps en une image lithologique du sous-sol et pour cela donc d'estimer avec suffisamment de précision la valeur de l'impédance acoustique des différentes couches du sous-sol, c'est-à-dire le produit de leur densité par la vitesse de propagation des ondes qui s'y propagent, dont les discontinuités sont responsables des réflexions.

Le passage à une représentation lithologique du sous-sol traduisant au mieux les coupes sismiques obtenues, est en général très délicat à résoudre. Une méthode classique permet par une déconvolution dite monocanal et par l'établissement de pseudo-logs d'impédance acoustique, de réaliser cette inversion. Elle consiste essentiellement, l'excitation sismique appliquée au sol étant préalablement estimée, à reconstituer à partir des sismogrammes réels la distribution des valeurs de l'impédance acoustique en fonction de la profondeur mesurée en temps de propagation. Une telle méthode est décrite par exemple dans un article intitulé "Inversion of seismograms and pseudo-velocity logs" in Geophysical Prospecting vol. 25, pp 231-250, 1977.

On vérifie le bien-fondé des résultats par référence à d'autres données que l'on possède par ailleurs. En général on dispose d'informations sur la position des interfaces et sur certaines caractéristiques du sous-sol, qu'elles résultent d'interprétations antérieures ou aient été obtenues autrement en réalisant des mesures de puits (diagraphies, PSV, etc) dans un ou éventuellement plusieurs forages traversant la partie du sous-sol étudiée, avec différents outils.

Les résultats obtenus par ce type de méthode ne sont pas toujours satisfaisants. Ils se révèlent souvent peu conciliables avec les résultats des mesures diagraphiques. La divergence des résultats est généralement attribuée aux incertitudes sur la forme exacte de l'excitation transmise au sous-sol, au bruit de fond important perturbant les signaux sismiques utiles et aussi à leur bande de fréquence relativement étroite. De plus les solutions que l'on peut trouver au problème de l'inversion sont instables. Des distributions d'impédance très différentes peuvent expliquer tout aussi bien une même section sismique. La tâche de l'interprétateur qui doit dériver un modèle géologique d'après la distribution des valeurs d'impédance obtenues par ces inversions, en le conciliant avec les différentes données connues par ailleurs, est donc délicate. On vérifie aussi que dans la pratique, le modèle lithologique obtenu peut être remis en cause.

Une approche connue pour remédier aux inexactitudes d'un modèle, consiste à le perfectionner par étapes successives. A partir d'un modèle initial choisi a priori d'après des données résultant d'interprétations et de diagraphies, et à ce stade encore largement hypothétique, on calcule des sismogrammes synthétiques qui constituent la réponse du modèle et on les compare aux sismogrammes réels obtenus. Les écarts constatés traduisant l'imperfection du modèle, on modifie celui-ci. Ce cycle de construction de sismogrammes synthétiques et de comparaison est repris et l'on sélectionne de proche en proche les variations appliquées au modèle de base qui conduisent à une réduction des écarts de manière à se rapprocher le plus possible des sismogrammes réels obtenus.

Il est également connu d'automatiser le processus ci-dessus en recherchant la distribution d'impédance acoustique telle que les sismogrammes synthétiques s'ajustent au mieux sur les enregistrements sismiques. De telles approches en utilisation mono-canal, sont décrites par exemple par Bamberger et al in Geophysics vol 47, pp 757-770, Mai 1982 ou par Oldenburg et al in Proceeding of the IEEE, special issue on Seismic Inversion, Mars 1986.

L'obtention d'une section en impédance qui soit bien compatible avec les informations géologiques, rend nécessaire que l'on impose une corrélation latérale sur les résultats et donc que l'on trouve des solutions convenables dans un plan plutôt qu'une série de solutions indépendantes en considérant séparément l'inversion des différentes traces. Ces traitements sont multicanaux. Selon le mode de paramétrisation du modèle lithologique, on est conduit à des modes de résolution très différents.

L'intervalle (O, X) qui correspond à la longueur du profil sismique que l'on cherche à interpréter, ayant été divisé en une suite d'intervalles disjoints entre des points de contrôle, on peut paramétrer le modèle par la géométrie des couches et en supposant que l'impédance est une fonction constante en profondeur à l'intérieur de chaque couche et continue avec une variation linéaire en x à l'intérieur de chacun desdits intervalles. Une telle méthode est décrite par exemple dans le brevet US 4.679.174.

Ce mode de paramétrisation est intéressant s'il permet de réduire le nombre de paramètres à traiter c'est-à-dire si l'épaisseur des différentes couches et les intervalles disjoints ne sont pas choisis trop petits. Mais dans ce cas, la paramétrisation ne reflètera pas la réalité car la distribution des valeurs de l'impédance acoustique à l'intérieur d'une couche géologique est en général bien plus complexe.

La méthode selon l'invention permet d'obtenir un modèle optimal à au moins deux dimensions représentant les variations d'au moins un paramètre physique d'un milieu hétérogène tel que le sous-sol, responsables des réflexions subies par des ondes émises dans le sous-sol, le modèle s'accordant au mieux avec des enregistrements de signaux reçus par un ensemble de capteurs disposés hors du milieu en réponse aux ondes réfléchies issues du milieu, avec une valeur dudit paramètre physique choisie en au moins un point, obtenue à la suite de mesures ou d'évaluations et avec d'autres informations concernant le type d'hétérogénéïtés recherché. Elle comporte :

- la construction d'un modèle de référence dans lequel les valeurs dudit paramètre physique s'adaptent aux valeurs choisies et auxdites informations concernant les hétérogénéïtés,
- la construction d'enregistrements synthétiques traduisant la réponse du modèle aux ondes émises depuits l'extérieur et
- la construction du modèle optimal qui permet un ajustement des enregistrements synthétiques sur les enregistrements de signaux reçus.

La méthode selon l'invention est caractérisée en ce que :

- la construction du modèle optimal est obtenue en minimisant globalement les écarts entre les valeurs de signaux lus sur lesdits enregistrements de signaux reçus et lesdits enregistrements synthétiques d'une part et les écarts dudit paramètre physique par rapport aux valeurs prises par le même paramètre en tout point du modèle de référence d'autre part, et en ce qu'elle comporte
- l'application auxdits écarts d'opérateurs choisis pour modéliser les incertitudes respectivement sur les signaux enregistrés et sur le modèle de référence ainsi que pour imposer au modèle optimal une corrélation entre les valeurs du paramètre aux différents points de celui-ci.

Le milieu hétérogène à modéliser peut être par exemple une zone du sous-sol, l'ensemble de capteurs étant disposé au-dessus de ladite zone et la valeur du paramètre physique mesurée en au moins un point du milieu est obtenue par des moyens de réception de signaux disposés dans au moins un puits traversant cette zone du sous-sol.

Suivant un mode de réalisation, les signaux enregistrés sont des signaux sismiques renvoyés par les différentes discontinuités du sous-sol, ledit paramètre physique est l'impédance acoustique des différentes couches de terrain, ladite valeur du paramètre est obtenue par des mesures dans au moins un puits, et le modèle de référence représente un modèle stratigraphique dont les valeurs s'accordent aux valeurs d'impédance acoustique obtenues dans chaque puits.

Suivant un mode préféré de réalisation, les opérateurs appliqués aux écarts sont des matrices de covariance dont les termes sont choisis en fonction d'une évaluation des incertitudes sur le modèle de référence et les enregistrements de signaux reçus.

La méthode selon l'invention, ses effets et ses avantages apparaîtront mieux à la lecture de la description ci-après d'un mode de réalisation de la méthode appliquée à la modélisation du sous-sol, donné à titre d'exemple non limitatif, en se référant aux dessins annexés où :

- la figure 1 montre un exemple de section sismique à 400 traces (entre 1,05 s et 1,3 s) d'une zone de sous-sol obtenue après des traitements classiques (déconvolution, sommation, etc);
- la figure 2 montre un exemple de logs d'impédance acoustique obtenus à partir de diagraphies effectuées

dans un puits P1 (A) et dans un puits P4 (B1) traversant ladite zone et un pseudo log (B2) obtenu à l'abscisse du puits (P4) par la méthode selon l'invention;

– la figure 3 montre un modèle de référence construit par la technique de modélisation stratigraphique en prenant comme données les valeurs d'impédance obtenues dans un seul puits P1, les horizons indiqués par les signaux sismiques étant utilisés pour guider latéralement l'extrapolation de ces données;

– la figure 4 montre une section sismique résiduelle associée au modèle de la figure 3, obtenue par soustraction à la coupe sismique de la figure 1, d'une coupe sismique synthétique reconstituée en prenant pour base le même modèle;

– la figure 5 montre un exemple de modèle d'impédance qui peut être obtenu par la méthode selon l'invention si l'interprétateur accorde une confiance très faible au modèle de référence;

– la figure 6 montre une section sismique résiduelle correspondant au modèle de la figure 5;

– la figure 7 montre un modèle d'impédance optimal obtenu par la méthode selon l'invention avec un choix réaliste d'opérateurs de covariance;

– la figure 8 montre une section sismique résiduelle correspondant au modèle optimal de la figure 7; et

– la figure 9 montre une exemple d'organigramme permettant de construire le modèle optimal recherché.

La méthode selon l'invention comporte tout d'abord l'établissement d'un modèle de référence bidimensionnel $M_R(x,\tau)$ traduisant les variations d'une caractéristique physique du milieu à partir de données ponctuelles obtenues par des mesures in situ et d'informations stratigraphiques (x représente ici la cordonnée latérale et T la profondeur mesurée en temps de parcours aller retour des ondes depuis la surface). Dans le cas de la prospection sismique le modèle représente la distribution de l'impédance acoustique du sous-sol sur une certaine longueur X de profil sismique exploré et une profondeur maximale T (définie en temps).

Le modèle à construire doit respecter les mesures ponctuelles disponibles dans la zone explorée. Elles sont obtenues souvent par des diagraphies de densité et de vitesse qui ont été effectuées dans un ou plusieurs puits. On peut donc connaître en fonction du temps de propagation des ondes entre la source d'émission et les récepteurs sismiques, la distribution des valeurs de l'impédance acoustique des terrains traversés par chaque puits. Des corrections éventuelles ayant été introduites pour mettre chaque distribution d'impédance en accord avec les données sismiques et notamment pour situer correctement la profondeur (en temps) des discontinuités importantes.

On peut donc imposer que le modèle bidimensionnel à construire $M_R$ corresponde à la verticale de chaque forage, à la suite de valeurs d'impédance qui y ont mesurées. Si I(I $\geqq$1) est le nombre de puits forés aux abscisses $x_i$(i = 1,...,I) pour lesquels on dispose de distributions de valeurs d'impédance $Z_{xi}(\tau)$, obtenues par des mesures, le modèle doit respecter la condition :

$$M_R(x_i,\tau) = Z_{xi}(\tau) \quad (1)$$

La construction d'un modèle de référence peut se faire par la technique classique de modélisation stratigraphique qui tient compte à la fois des données de diagraphie (relation 1), des informations résultant de l'interprétation structurale des coupes sismiques et de l'interprétation stratigraphique.

On observe que les formations souterraines présentent moins d'irrégularités le long des isochrones (horizons indiqués par les signaux) que dans des directions orthogonales. Les isochrones sont donc des lignes de corrélation du milieu exploré.

La géométrie d'une ligne de corrélation peut être obtenue en pointant certains horizons caractéristiques sur les sections sismiques ayant subi au préalable un traitement classique en géophysique, de déconvolution stratigraphique. L'interprétation structurale permet de diviser la zone du sous-sol explorée en plusieurs parties. Dans chacune d'elles l'interprétateur peut définir les modes de dépôts, à partir de ses connaissances géologiques : débordement (onlap) régression (offlap) ou concordance. Cette définition permet de connaître l'orientation des lignes de corrélation en tout point du milieu.

La technique de modélisation stratigraphique consiste à définir des variations linéaires de l'impédance le long de lignes de corrélation d'équation $\tau$ (x) entre les valeurs connues de $Z_{xi}(\tau\ (xi))$ aux "intersections" avec chaque puits.

Si l'on ne dispose que de données relatives à un seul puits, on effectue une extrapolation en considèrant que le modèle est constant le long des lignes de corrélation. Dans le cas où l'on dispose de données relatives à deux puits par exemple, on peut effectuer entre eux une interpolation linéaire. Le modèle de référence de la figure 3 a été construit à partir des données de diagraphie dans un seul puits ($P_1$) en considérant que les paramètres du modèle étaient invariables le long des lignes de corrélation.

Dans l'exemple étudié, on peut définir un opérateur de modélisation F(Z) permettant de calculer la section sismique synthétique Ssynt(x,t). Cette section représente la réponse sismique de la section en impédance $Z(x,\tau)$, de la zone du sous-sol explorée sous l'effet des excitations sismiques $W_x(t)$ supposées connues, appliquées en surface au point d'abscisse x. L'opérateur F(Z) a pour expression :

$$F(Z) = Ssynt(x,t) = \int R(x,\tau).W_x(t-\tau)d\tau \quad (2)$$

avec

$$R(x,\tau) = \frac{d}{d\tau} \log Z(x,\tau) \quad (3)$$

Les excitations sismiques ou ondelettes $W_x(t)$ utilisées sont déterminées préalablement par des opérations classiques de déconvolution stratigraphique, à partir des mesures diagraphiques dans le puits P1 et en supposant ces ondelettes constantes suivant l'axe x.

En général le modèle de référence obtenu n'est pas satisfaisant, vis-à-vis de l'information sismique, comme le montre la figure 3. Une coupe sismique synthétique Ssynt(x,t) a été produite à partir du modèle stratigraphique puis comparée à la coupe sismique à interpréter Senr.(x,t).

La coupe sismique résiduelle (fig. 4) traduisant les différences entre les deux coupes précédentes montre bien que le modèle stratigraphique ne représente qu'une approximation de la réalité et cela d'autant plus que l'on s'éloigne de l'abscisse ou les données diagraphiques ont été mesurées.

La méthode selon l'invention permet de construire dans une seconde étape un modèle optimal représentant au mieux d'après les données disponibles, la distribution $M(x,\tau)$ d'un paramètre physique et ici en l'occurrence de l'impédance acoustique.

L'interprétateur accordant généralement une grande confiance aux mesures in situ (telles que les données de diagraphie) utilisées pour la construction du modèle de référence, les incertitudes sur celui-ci sont liées à des erreurs sur la géométrie du modèle de référence dans la définition des lignes de corrélation par exemple et à la présence d'hétérogénéités du milieu réel le long de ces lignes. Ces erreurs sont fortement corrélées dans la direction des lignes de corrélation et non corrélées dans les directions orthogonales.

On modélise les erreurs sur le modèle de référence par une variation aléatoire gaussienne dont l'opérateur de covariance est choisi à variation exponentielle le long des lignes de corrélation, et diagonal dans les directions orthogonales :

$$C_m(x, x',\tau,\tau) = V^2 \exp - \frac{x-x'}{l} . \tau(\tau-\tau') \quad (4)$$

où V représente la variance, l la longueur de corrélation et $\tau$ est une mesure de Dirac. On peut choisir d'autres opérateurs de covariance pour peu qu'ils traduisent une corrélation latérale. Par ailleurs la covariance est conditionnée par la disponibilité de mesures de puits.

La variance $V(x,\tau)$ et la longueur de corrélation $l(x,\tau)$ peuvent varier latéralement et temporellement. Ces deux paramètres sont donc définis sur l'ensemble du domaine correspondant au modèle de référence. Ainsi la longueur de corrélation doit être nulle ou presque nulle au voisinage d'une discordance. Sinon il se produit un effet de lissage du modèle optimal à l'emplacement correspondant.

L'interprétateur ayant choisi partout des valeurs convenables pour $V(x,\tau)$ et $l(x,\tau)$, on détermine alors l'inverse de l'opérateur de covariance Cm (une matrice) à associer au modèle de référence $M_R(x,\tau)$.

Les mesures indirectes des paramètres physiques de la zone explorée telles que celles obtenues par des opérations de prospection sismique, sont généralement entachées d'erreurs. On traduit ces erreurs par une variable aléatoire gaussienne de moyenne nulle pouvant être corrélée en temps par exemple, le spectre d'amplitude du bruit sismique étant le même que celui du signal, mais non corrélé latéralement (suivant x). Il en résulte que l'opérateur de covariance $C_S$ (une matrice également), décrivant les incertitudes sur les mesures indirectes dont on dispose (les données sismiques par exemple) est donc diagonal relativement à la variable x. Il est complètement défini par la variance Vs(x,t) choisie en chaque point du domaine exploré. L'interprétateur a l'entière responsabilité du choix des variances qui décrivent les incertitudes sur les mesures indirectes dont il dispose.

On détermine alors la distribution d'impédance Mopt(x,t) la plus vraisemblable. C'est celle qui, à l'intérieur des limites fixées en x et t, minimise la fonctionnelle suivante :

$$J(Z) = J_M(Z) + J_s(Z) \quad (5)$$ où :

$$J_M(Z) = (M(x,\tau) - M_{pr}(x,\tau))^T . Cm^{-1} . (M(x,\tau) - M_{pr}(x,\tau)) \quad (6)$$

et

$$J_s(Z) \; (S_{Synt}(x,t) - S_{enr}(x,t))^T \; . \; Cs^{-1} \; . \; (S_{Synt}(x,t) - S_{enr}(x,t)) \quad (7)$$

où les matrices $Cm^{-1}$ et $Cs^{-1}$ représentent respectivement les inverses des matrices $C_m$ et $C_s$ choisies et où les termes sous la forme $(\ )^T$ représentent les transposées de matrices.

Dans le cas de variations continues la composante $J_M$ s'exprime de la manière suivante :

$$J_M(x,t) = \int_0^X \int_0^T \left[ \frac{1}{2lV^2} (M - M_{pr})^2 + \frac{l}{2V^2} (\overrightarrow{grad} (M - M_{pr}).u)^2 \right] dx \quad d \quad (6)$$

La détermination du modèle recherché Mopt(x,τ) qui minimise la fonctionnelle J peut être obtenue par différentes méthodes connues d'optimisation (méthode dite du gradient ou du gradient conjugué, méthode dite de quasi-Newton etc) en accord avec l'organigramme de la figure 9, par des moyens informatiques. L'interprétateur ayant défini un modèle de référence et les valeurs des différents paramètres V et l modélisant les erreurs, la construction du modèle optimal est conduite de façon automatique.

Un modèle $M_{opt}(x,\tau)$, reconstruit en appliquant de la méthode selon l'invention et en utilisant le modèle de référence stratigraphique de la figure 3, est représenté à la figure 7. On a pu vérifier sa validité en calculant les sismogrammes synthétiques qui lui sont associés. La coupe sismique résiduelle (fig. 8) traduisant l'écart entre ces sismogrammes synthétiques et les sismogrammes déduits des enregistrements sur le terrain, ne fait apparaître que des "événements" non corrélés latéralement, il ne reste essentiellement que du bruit.

La fonctionnelle globale à minimiser J(Z) est la somme d'une fonction d'écart proprement sismique $J_s(Z)$ et d'une autre proprement géologique Jm(Z). La première a pour effet de corriger la géométrie du modèle de référence et d'introduire des variations latérales qui expliquent la section sismique déduite des enregistrements. La fonctionnelle géologique $J_m(Z)$ permet d'imposer au modèle optimal de satisfaire les connaissances géologiques de l'interprétateur. Par un choix approprié de celle-ci, il peut rendre stable la solution du problème inverse qui est fondamentalement sous déterminée, comme il est bien connu des spécialistes. En particulier elle rend possible l'introduction dans la solution, des basses fréquences présentes dans les données de diagraphie mais non dans les données sismiques. Dans le terme géologique, un choix approprié des variations et des longueurs de corrélation a pour effet de structurer latéralement de façon très efficace le modèle obtenu par la mise en oeuvre de la méthode selon l'invention. Ceci a pour effet d'empêcher que la section sismique synthétique déduite du modèle ne s'ajuste sur les bruits incohérents présents dans la section sismique déduite des enregistrements. Il en résulte une bonne élimination du bruit et donc une amélioration de la résolution verticale du sous-sol exploré.

On doit aussi souligner que la fonction d'écart géologique introduit un couplage entre les traces adjacentes du modèle d'impédance. L'inversion de la section sismique s'effectue donc globalement et non trace par trace comme on le réalise habituellement (cf. Oldenburg et al précédemment cité).

Les relations (4) et (5) montrent que si l'interprétateur accorde peu de confiance aux données sismiques, en choisissant des valeurs importantes pour la variance sismique $V_S$, la fonction sismique $J_S(Z)$ joue dans la fonctionnelle J(Z) un rôle faible par rapport à celui de la fonction géologique $J_M(Z)$. Le modèle résultant se rapproche alors du modèle stratigraphique pris comme modèle de référence. Si l'interprétateur au contraire accorde peu de confiance au modèle stratigraphique en choisissant un écart type V grand et une longueur de corrélation l petite, le modèle résultant sera proche d'un modèle obtenu par une classique déconvolution stratigraphique (traitement mono-canal). C'est le cas pour le modèle montré à la figure 5 où l'on a minimisé essentiellement les écarts par rapport aux données sismiques. On constate que le bruit présent sur la section

sismique est transféré dans le modèle obtenu, comme le montre la section sismique résiduelle de la figure 6.

On voit donc que le modèle optimal est intermédiaire entre un modèle obtenu par la modélisation stratigraphique et un autre résultant d'un traitement du type mono-canal (déconvolution stratigraphique et pseudologs) des seules données sismiques.

La cohérence structurale du modèle optimal (fig. 7) est meilleure que celle obtenue en utilisant les seules données sismiques, et les bruits incohérents latéralement (suivant x) n'ont pas été interprétés comme le montre la figure 8. Il a été obtenu par extrapolation à partir des mesures effectuées dans un seul puits (P1) et l'on voit sur la figure 2 que les valeurs d'impédance qu'il donne à l'abscisse du puits P4 (courbe B2) correspondent bien à celles qui y ont été effectivement mesurées (courbe B1). La méthode permet donc de prédire des logs à partir de données sismiques.

Les opérateurs de covariance Cm et Cs permettent de décrire les incertitudes sur les mesures sismiques et sur le modèle de référence. Par l'application de la méthode selon l'invention, on peut trouver un compromis entre la vraisemblance du modèle de référence et l'ajustement au données sismiques. Si l'on privilégie les données sismiques, la solution tend vers le résultat d'une déconvolution stratigraphique classique tandis que si l'on n'accorde qu'une confiance limitée aux données sismiques, la solution tend vers le modèle de référence. Ainsi, en faisant varier les incertitudes et donc le degré de connaissance sur les données et sur le modèle de référence, l'application de la méthode conduit automatiquement à une grande variété de modèles différents et l'on peut explorer l'ensemble des solutions vraisemblables.

Le mode de réalisation qui a été décrit, comporte l'utilisation de valeurs d'impédances résultant des mesures in situ. Si l'on ne dispose pas de telles mesures mais de simples estimations ou évaluations, la méthode selon l'invention peut néanmoins être mise en oeuvre à partir des valeurs de paramètre dont on dispose.

Le mode de réalisation qui a été décrit comporte l'utilisation du temps de parcours vertical aller et retour des ondes émises, pour mesurer la profondeur de la zone étudiée Ceci n'est nullement indispensable. Si l'on dispose de données ou d'estimations concernant la vitesse de propagation C des ondes dans le milieu en fonction de la profondeur, obtenues par quelque procédé qe ce soit, on peut par un changement de variables remplacer la coordonnée $\tau$ par la coordonnée z mesurant la profondeur en mètres, ces deux coordonnées étant reliées par une relation du type :

$$z = \frac{1}{2} \int_0^{\tau} C(x, \theta)\, d\theta$$

La méthode selon l'invention a été décrite dans une application à la modélisation de l'impédance acoustique du sous-sol. Il est bien évident qu'elle peut s'appliquer à tout autre paramètre physique tel que par exemple la vitesse de propagation des ondes ou la densité influant sur les données sismiques obtenues et que le modèle obtenu peut être représenté aussi bien dans le système de coordonnées $(x,\tau)$ que dans le système (x, z).

D'une façon plus générale, on ne sortirait pas du cadre de l'invention en appliquant la méthode selon l'invention à la réalisation de tomographies dans des domaines très différents notamment dans le domaine de l'imagerie médicale où du contrôle non destructif.

## Revendications

1. Méthode pour obtenir un modèle optimal $M_{opt}(x,\tau)$ à au moins deux dimensions représentant les variations d'au moins un paramètre physique d'un milieu hétérogène tel que le sous-sol, responsables des réflexions subies par des ondes émises dans le sous-sol, le modèle s'accordant au mieux avec des enregistrements (Senr.) de signaux par un ensemble de capteurs disposés hors du milieu en réponse aux ondes réfléchies issues du milieu, avec une valeur dudit paramètre physique choisie en au moins un point et obtenue à la suite de mesures ou d'évaluations, et avec d'autres informations concernant le type d'hétérogénéïtés recherché, la méthode comportant

– la réalisation d'un modèle de référence $M_R(x,\tau)$ dans lequel les valeurs dudit paramètre physique s'adaptent aux valeurs choisies,
– la réalisation d'enregistrements synthétiques (Ssynt.) traduisant la réponse du modèle aux ondes émises depuis l'extérieur et
– la construction du modèle optimal qui permet un ajustement des enregistrements synthétiques sur les

enregistrements de signaux reçus, caractérisée en ce que :

– ladite construction du modèle optimal est obtenue en minimisant globalement les écarts entre les valeurs de signaux lus sur lesdits enregistrements de signaux reçus (Senr.) et lesdits enregistrements synthétiques (Ssynt) d'une part et les écarts dudit paramètre physique par rapport aux valeurs prises par le même paramètre en tout point du modèle de référence d'autre part, la méthode comportant en outre

– l'application auxdits écarts d'opérateurs choisis pour modéliser les incertitudes respectivement sur les signaux enregistrés et sur le modèle de référence ainsi que pour imposer au modèle optimal une corrélation entre les valeurs du paramètre aux différents points de celui-ci.

2. Méthode selon la revendication 1, caractérisée en ce que ledit milieu hétérogène est constitué par une zone du sous-sol, l'ensemble de capteurs est disposé au-dessus de ladite zone et ladite valeur du paramètre est mesurée par des moyens de réception disposés dans au moins un puits traversant ladite zone.

3. Méthode selon la revendication 1, caractérisée en ce que les signaux enregistrés sont des signaux sismiques renvoyés par les différentes discontinuités du sous-sol et reçus par un ensemble de capteurs disposés au-dessus d'une zone du sous-sol, ledit paramètre physique est l'impédance acoustique $Z(x,\tau)$ associée aux différentes couches du terrain, ladite valeur du paramètre est mesurée en au moins un puits traversant ladite zone, et le modèle de référence $M_R$ représente un modèle stratigraphique dont les valeurs s'accordent aux valeurs d'impédance acoustique obtenues dans chaque puits.

4. Méthode selon l'une des revendications 1 à 3, caractérisée en ce que les opérateurs sont des matrices de covariance dont les termes sont choisis en fonction d'un évaluation des incertitudes sur le modèle de référence et sur les enregistrements de signaux reçus.

5. Méthode selon l'une des revendications 1 à 3, caractérisée en ce qu'elle comporte une étape de traitement pour minimiser la somme d'une première fonction $J_M$ liée au modèle de référence et d'une seconde fonction $J_s$ liée aux données enregistrées, telles que :

$$J_M = (M - M_R)^T\ Cm^{-1}(M - M_R)$$

et

$$Js = (S_{synt} - S_{enr})^T\ Cs^{-1}(S_{synt} - S_{enr})$$

où :

$(M - M_R)$ est un vecteur dont les termes mesurent les écarts estimés du modèle M par rapport au modèle de référence $M_R$,

$(M - M_R)^T$ est le même vecteur transposé,

$Cm^{-1}$ est l'inverse d'une matrice de covariance traduisant les incertitudes sur le modèle de référence,

$(S_{synt} - S_{enr})$ est un vecteur dont les termes mesurent les écarts mesurés entre les signaux lus respectivement sur les enregistrements effectués et les enregistrements synthétiques,

$(S_{synt} - S_{enr})^{-T}$ est le même vecteur transposé, et

$Cs^{-1}$ est l'inverse d'une matrice de covariance traduisant les incertitudes sur les enregistrements des signaux captés hors du milieu.

6. Méthode selon l'une des revendications précédentes, caractérisée en ce que la valeur du paramètre physique en au moins un point est mesurée à l'intérieur du milieu.

7. Méthode selon l'une des revendications 1 à 5, caractérisée en ce que la valeur du paramètre physique en au moins un point est déterminée par une interprétation de données sismiques.

8. Méthode selon l'une des revendications 1 à 5, caractérisée en ce que la valeur du paramètre physique en au moins un point, est déterminée par analyse des vitesses de propagation des ondes dans le milieu.

9. Méthode selon l'une des revendications 1 à 5, caractérisée en ce que la valeur du paramètre physique en au moins un point, est choisie en fonction de la nature du milieu.

## Claims

1. Method used to obtain an optimal model $M_{opt}(x, \tau)$ in at least two dimensions representing the variations of at least one physical parameter of a non-uniform medium such as a sub-stratum, representative of the reflections experienced by waves transmitted through the sub-stratum, the model corresponding very closely with recordings ( Senr. ) the signals (Senr. ) by a number of sensors located outside the medium, in response to the reflected waves originating from the medium, with a value of the said physical parameter chosen at one point at least and obtained as the result of measurements or evaluations, and with other information concerning the type of non-uniformities to be determined, the method comprising :

– the construction of a reference model $M_R(x, \tau)$ in which the values of the said physical parameter are adapted to the chosen values

– the production of synthetic recordings ( Ssynt.) representing the response of the model to the waves

transmitted externally, and

– the construction of the optimal model which permits an adjustment of the synthetic recordings in accordance with the signal recordings received, characterised in that :

– the said construction of the optimal model is obtained by collectively reducing the differences between the values of the signals read in accordance with the said signal recordings received (Senr.) and the said synthetic recordings (Ssynt.), on the one hand, and the differences in the said physical parameter relative to the values taken for the same parameter at any point of the reference model, on the other hand, the method also comprising :

– the application to the said differences of operators selected in order to model the uncertainties respectively of the signals recorded and the reference model, and also to impose on the optimal model a correlation between the values of the parameter at its different points.

2. Method in accordance with claim 1, characterised in that the said non-uniform medium constitutes a zone forming part of the sub-stratum, all the sensors being located over the said zone and the said value of the parameter is measured by a means of reception located in at least one borehole passing through the said zone.

3. Method in accordance with claim 1, characterised in that the signals recorded are seismic signals reflected by the different discontinuities in the sub-stratum and received by a number of sensors located over a zone forming part of the sub-stratum, the said physical parameter being the acoustic impedance Z (x, $\tau$) associated with the different layers comprising the ground, the said value of the parameter being measured in at least one borehole passing through the said zone, the reference model $M_R$ representing a stratigraphic model in which the values correspond to the values of the acoustic impedance obtained in each borehole.

4. Method in accordance with one of claims 1 to 3, characterised in that the operators are in the form of covariant matrices, the terms being chosen in accordance with an evaluation of the uncertainties for the reference model and the signal recordings received.

5. Method in accordance with one of claims 1 to 3, characterised in that it comprises a processing stage for reducing the sum of a first function $J_M$ associated with the reference model and a second function $J_S$ associated with the data recorded, such that :

$$J_M = (M - M_R)^T Cm^{-1} (M - M_R)$$

and

$$Js = (S_{synt} - S_{enr})^T Cs^{-1} (S_{synt} - S_{enr})$$

Where :

$(M - M_R)$ is a vector where the terms measure the estimated differences of model M relative to the reference model $M_R$

$(M - M_R)^T$ is the same vector transposed.

$Cm^{-1}$ is the inverse of a covariant matrix representing the uncertainties of the reference model

$(S_{synt} - S_{enr})$ is a vector where the terms measure the differences measured between the signals read respectively for the recordings made and the synthetic recordings

$(S_{synt} - S_{enr})^T$ is the same vector transposed, and

$Cs^{-1}$ is the inverse of a covariant matrix representing the uncertainties of the signal recordings detected outside the medium

6. Method in accordance with one of the preceding claims, characterised in that the value of the physical parameter at one point at least is measured within the medium.

7. Method in accordance with one of claims 1 to 5, characterised in that the value of the physical parameter at one point at least is determined by an interpretation of the seismic data.

8. Method in accordance with one of claims 1 to 5, characterised in that the value of the physical parameter at one point at least is determined by an analysis of the speeds of propagation of the waves in the medium.

9. Method in accordance with one of claims 1 to 5, characterised in that the value of the physical parameter at one point at least is chosen in accordance with the nature of the medium.

## Patentansprüche

1. Verfahren zur Ermittlung eines optimalen Modells $M_{opt}(x, \zeta)$ mit mindestens zwei Dimensionen, das die Variationen von zumindest einem physikalischen Parameter eines heterogenen Mediums, wie dem Untergrund darstellt, wobei diese Variationen für die, durch in den Untergrund ausgesandte Wellen erfahrenen Reflexionen verantwortlich sind, wobei das Modell am besten mit Aufzeichnungen von, durch eine außerhalb des Mediums aufgestellte Gruppe von Aufnehmern empfangenen Signale ($S_{enr.}$), in Antwort auf die aus dem Medium hervorgegangenen reflektierten Wellen, mit einem an zumindestens einer Stelle gewählten und in der Folge durch Messungen oder Auswertungen erhaltenen Wert des physikalischen Parameters und, mit anderen die Art der

Homogenität betreffenden Informationen übereinstimmt, wobei das Verfahren umfasst

– die Realisierung eines Referenzmodells $M_R(x,\zeta)$, in dem die Werte dieses physikalischen Parameters sich an die gewählten Werte anpassen,

– die Realisierung von synthetischen Aufzeichnungen ($S_{synt.}$) , die die Antwort des Modells auf die von außen ausgesandten Wellen widergeben und

– der Aufbau des optimalen Modells, welches eine Einstellung der synthetischen Aufzeichnungen auf die empfangenen Signalaufzeichnungen erlaubt, dadurch gekennzeichnet, daß:

– der Aufbau des optimalen Modells erlangt wird, indem zum einen die Abweichungen zwischen den gelesenen Signalwerten der empfangenen Signalaufzeichnungen ($S_{enr.}$) und den synthetischen Aufzeichnungen ($S_{synt}$) und, zum anderen die Abweichungen dieses physikalischen Parameters zu den, an jedem Punkt des Referenzmodells genommenen Werten des selben Parameters global minimiert werden, wobei das Verfahren im weiteren umfaßt

– die Anwendung von Operatoren auf diese Abweichungen, die gewählt werden, um die Unsicherheiten hinsichtlich der aufgezeichneten Signale und des Referenzmodells modellieren zu können, sowie um im optimalen Modell eine Korrelation zwischen den Parameterwerten an verschiedenen Stellen desselben zu erzwingen.

2. Verfahren nach Anspruch 1, dadurch gekennzeichnet, daß dieses heterogene Medium aus einer Zone im Untergrund besteht, diese Gruppe von Aufnehmern oberhalb der genannten Zone angeordnet ist und der genannte Wert des Parameters durch die angeordneten Empfangsmittel in zumindestens einem diese Zone durchsetzenden Bohrloch gemessen wird.

3. Verfahren nach Anspruch 1, dadurch gekennzeichnet, daß die aufgezeichneten Signale seismische Signale sind, die durch die verschiedenen Unstetigkeiten im Untergrund zurückgesendet werden und die durch eine Gruppe von Aufnehmern, die sich oberhalb einer Zone des Untergrund befinden, empfangen werden, wobei der genannte physikalische Parameter die akustische Impedanz $Z(x,\zeta)$ ist, die den verschiedenen Schichten des Bodens zuordnungsbar ist, der genannte Wert des Parameters zumindestens in einem diese Zone durchsetzenden Bohrloch gemessen wird, und das Referenzmodell $M_R$ ein stratigraphisches Modell darstellt, dessen Werte mit den Werten des akustischen Widerstandes, die in jedem Bohrloch empfangen werden, übereinstimmen.

4. Verfahren nach einem der Ansprüche 1-3, dadurch gekennzeichnet, daß die Operatoren Kovarianzmatrixen sind, deren Terme als Funktion einer Auswertung der Unsicherheiten am Referenzmodell und bei den erhaltenen Aufzeichnungen der Signale gewählt werden

5. Verfahren nach einem der Ansprüche 1-3, dadurch gekennzeichnet, daß es einen Verarbeitungsschritt zur Minimierung der Summe einer ersten Funktion $J_M$, die sich auf das Referenzmodell bezieht und einer zweiten Funktion $J_S$, die sich auf die gegebenen Aufzeichnungen bezieht beinhaltet, dergestalt, daß:

$$J_M = (M - M_R)^T C^{-1}{}_m(M - M_R)$$

und

$$J_s = (S_{synt}- S_{enr})^T C^{-1}{}_s(S_{synt} -S_{enr})$$

wobei gilt:

$(M - M_R)$ ist ein Vektor, dessen Terme die geschätzten Abweichungen des Modells $M$ im Verhältnis zum referenzmodell $M_R$ darstellen,

$(M - M_R)^T$ ist der gleiche Vektor transponiert,

$C^{-1}{}_m$ ist die Inverse einer Kovarianzmatrix, die die Unsicherheiten auf das Bezugsmodell überträgt,

$(S_{synt}-S_{enr})$ ist ein Vektor, dessen Terme die gemessenen Abweichungen zwischen den Signalen messen, die jeweils aus den vorgenommenen Aufzeichnungen und den synthetischen Aufzeichnungen gelesen werden,

$(S_{synt}-S_{enr})^T$ ist der gleiche Vektor transponiert,

$C^{-1}{}_s$ ist die Inverse einer Kovarianzmatrix, die die Unsicherheiten auf die Aufzeichnungen der außerhalb des Mediums empfangenen Signale auf das Modell überträgt.

6. Verfahren nach einem der vorhergehenden Ansprüche, dadurch gekennzeichnet, daß der Wert des physikalishen Parameters an zumindestens einer Stelle im Inneren dieser Zone gemessen wird.

7. Verfahren nach einem der Ansprüche 1 bis 5, dadurch gekennzeichnet, daß der Wert des physikalischen Parameters an zumindestens einem Punkt durch eine Interpretation der seismischen Gegebenheiten ermittelt wird.

8. Verfahren nach einem der Ansprüche 1 bis 5, dadurch gekennzeichnet, daß der Wert des physikalischen Parameters an zumindestens einem Punkt durch eine Analyse der Fortpflanzungsgeschwindigkeiten der Wellen im Medium ermittelt wird.

9. Verfahren nach einem der Ansprüche 1 bis 5, dadurch gekennzeichnet, daß der Wert des physikalischen Parameters an zumindestens einem Punkt als Funktion der Eigenart des Mediums gewählt wird.

FIG.1

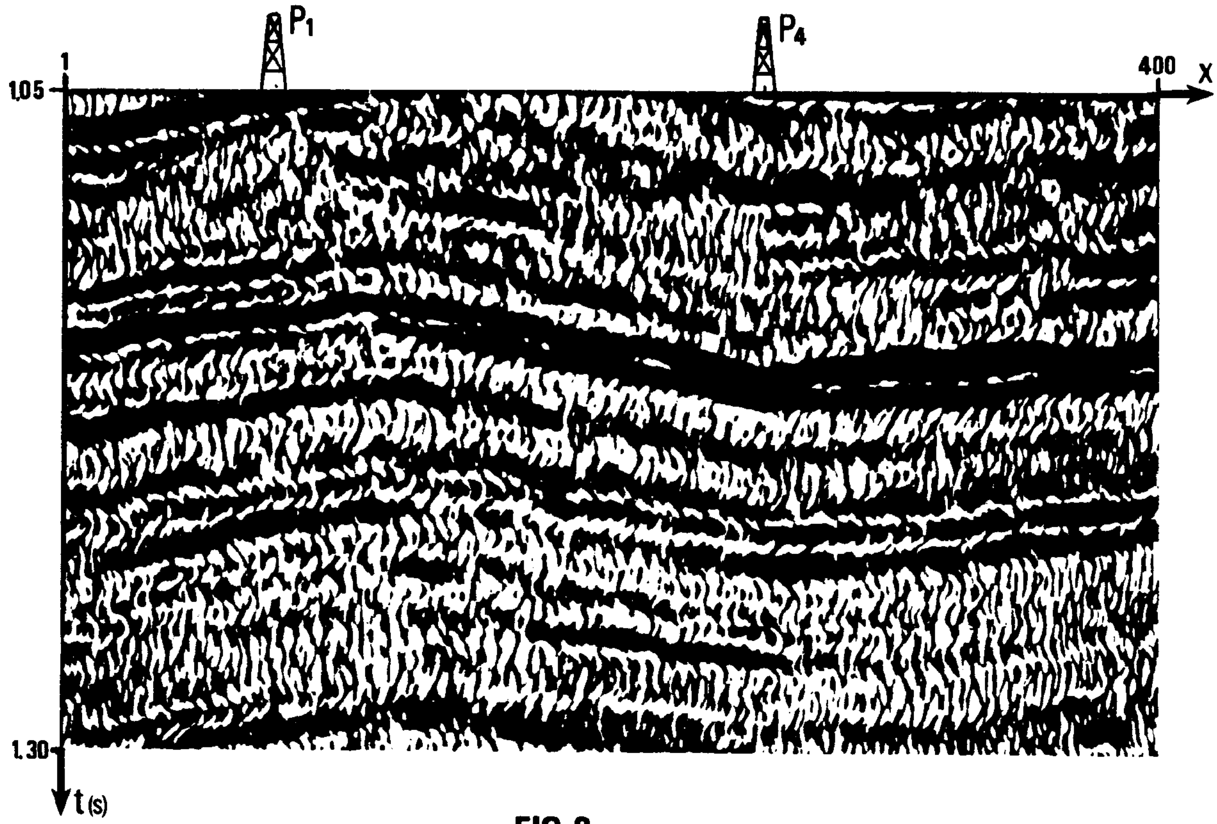


FIG.2

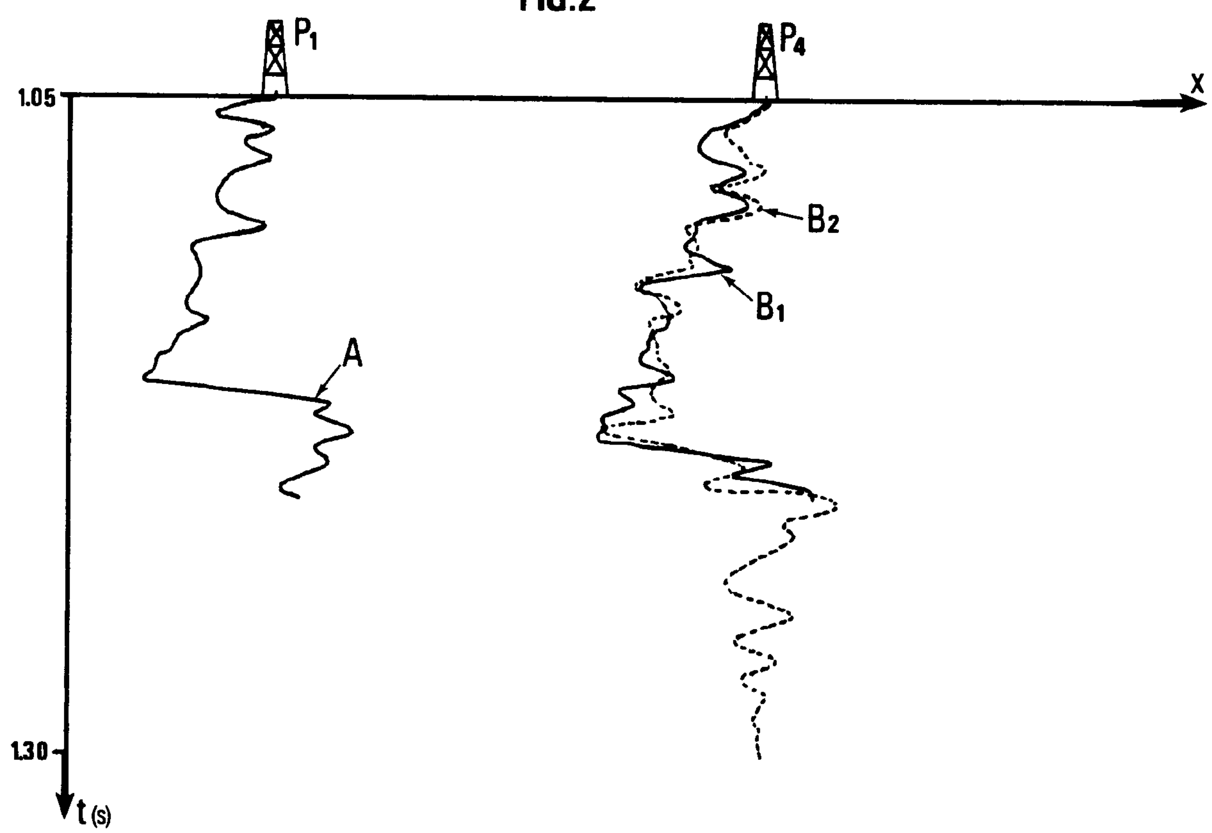

FIG.3

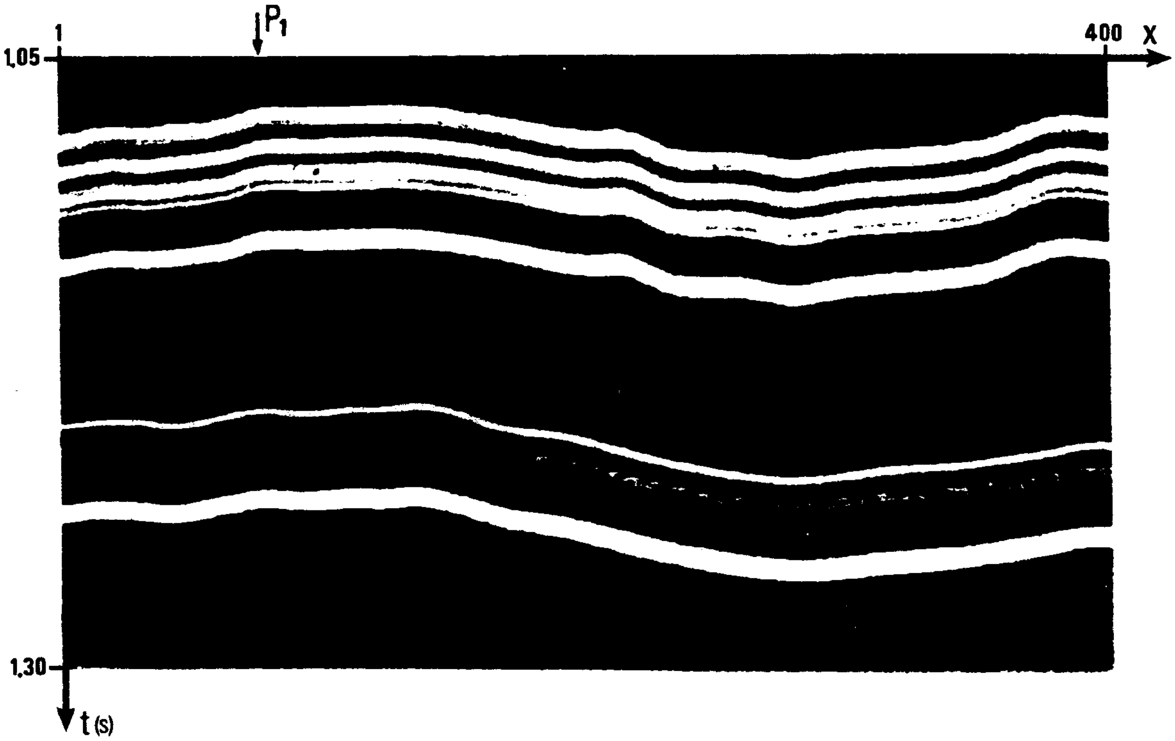


FIG.4

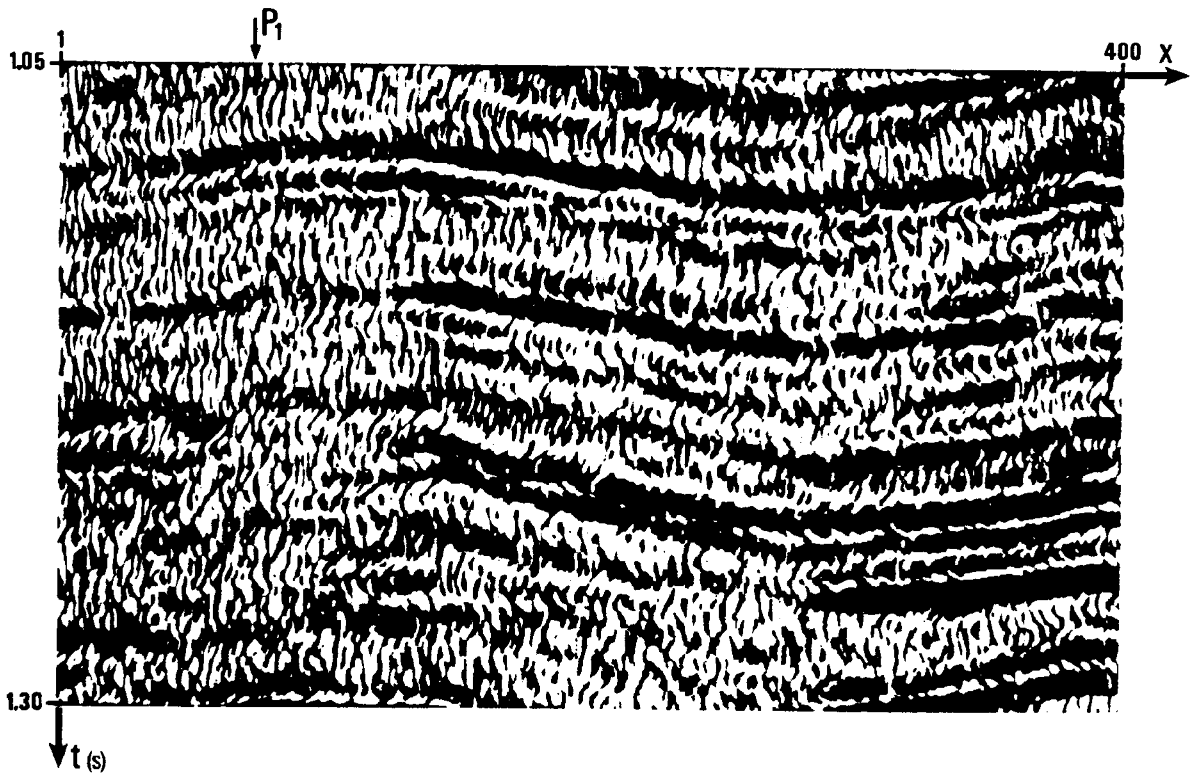

FIG.5

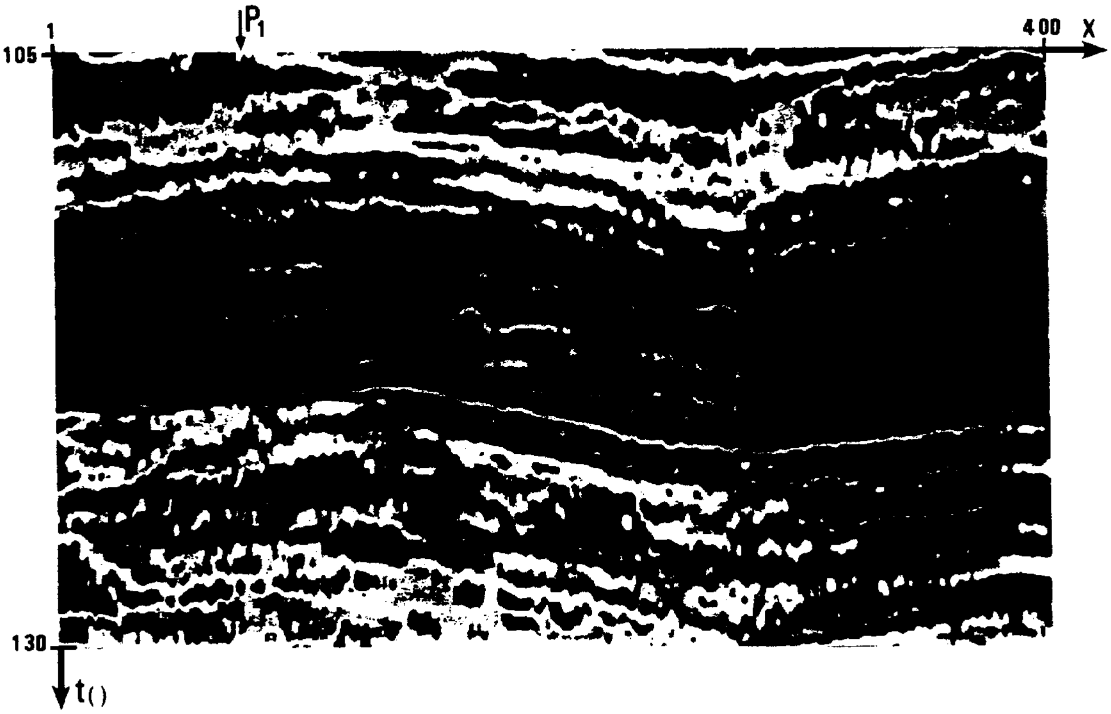


FIG.6

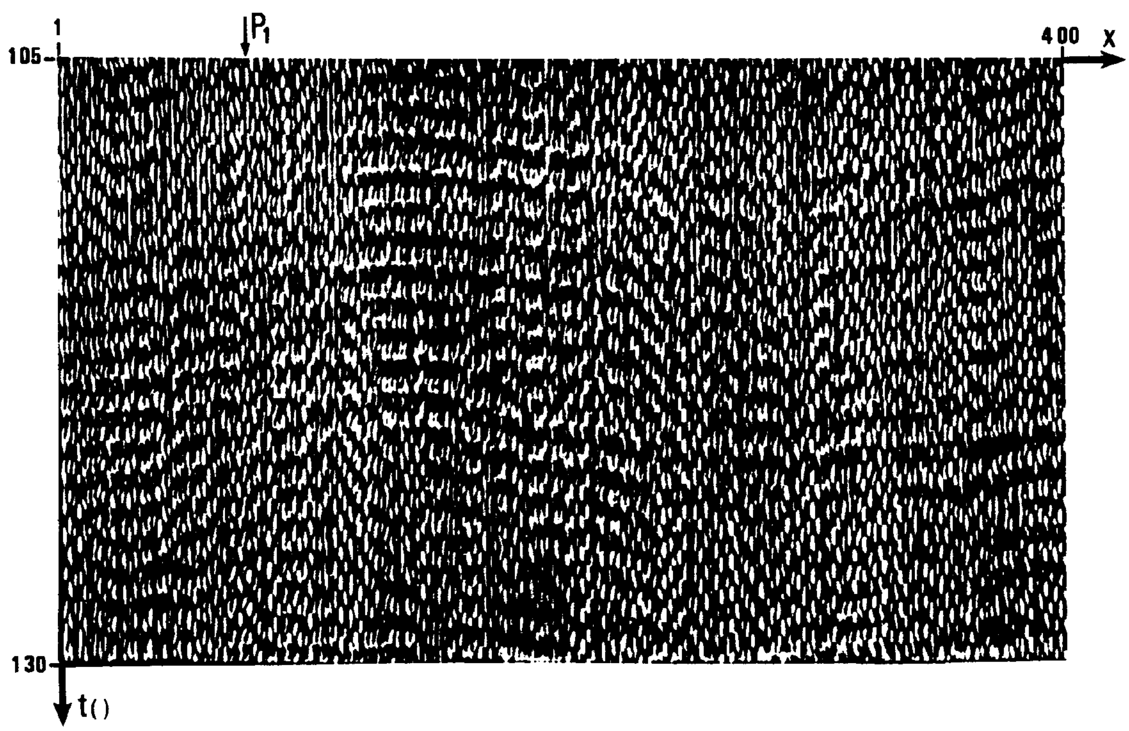

FIG.7

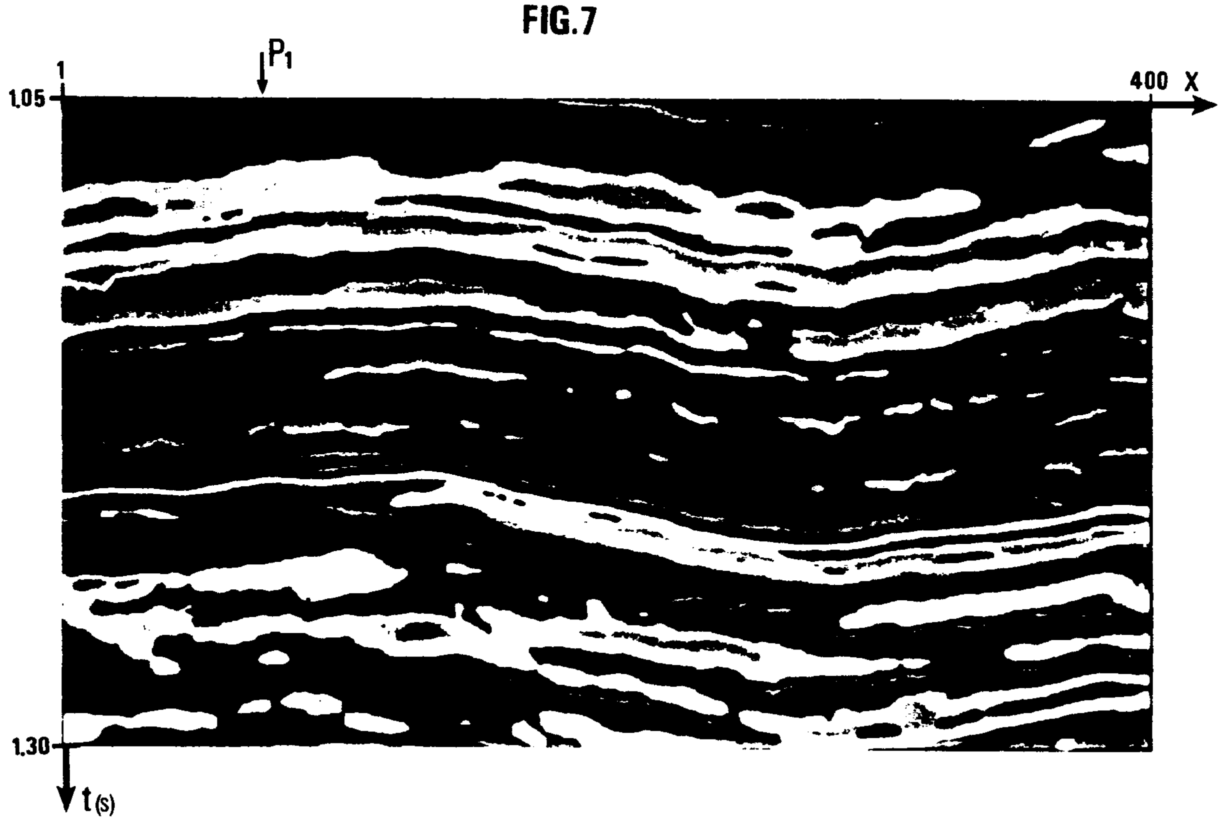


FIG.8

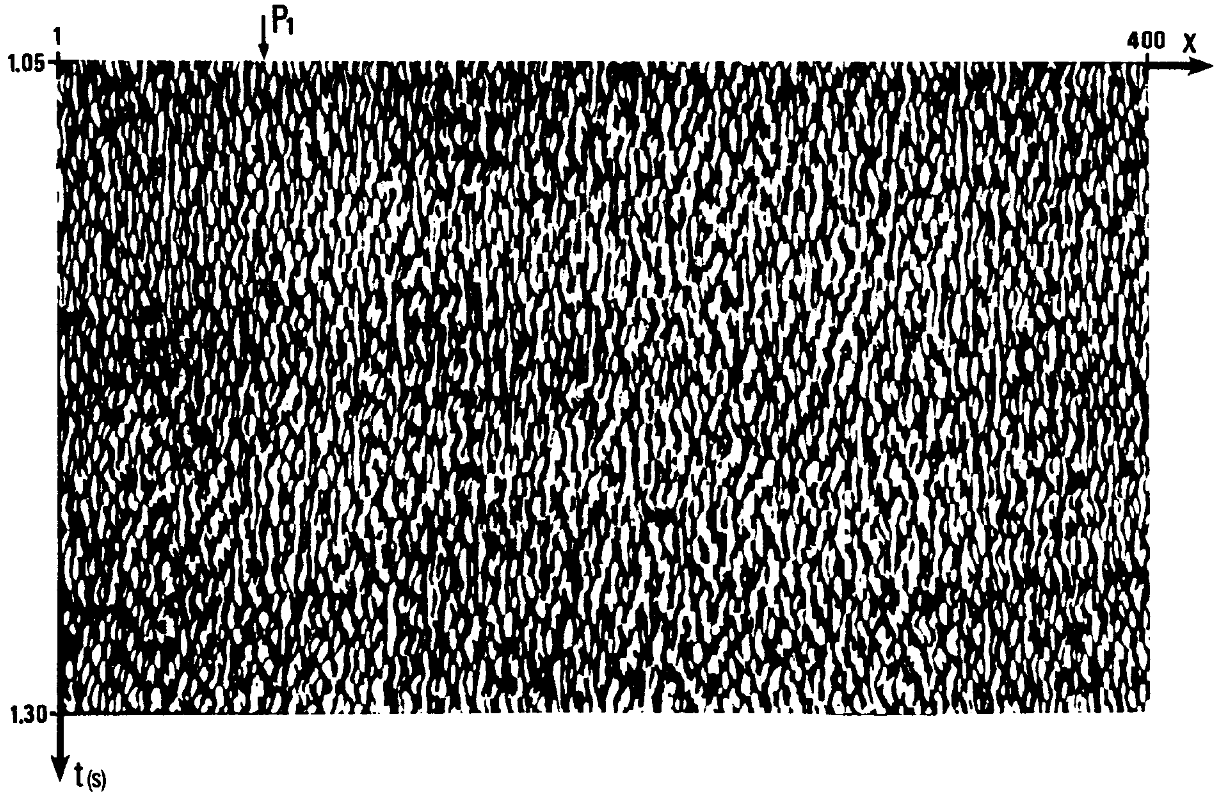

FIG.9

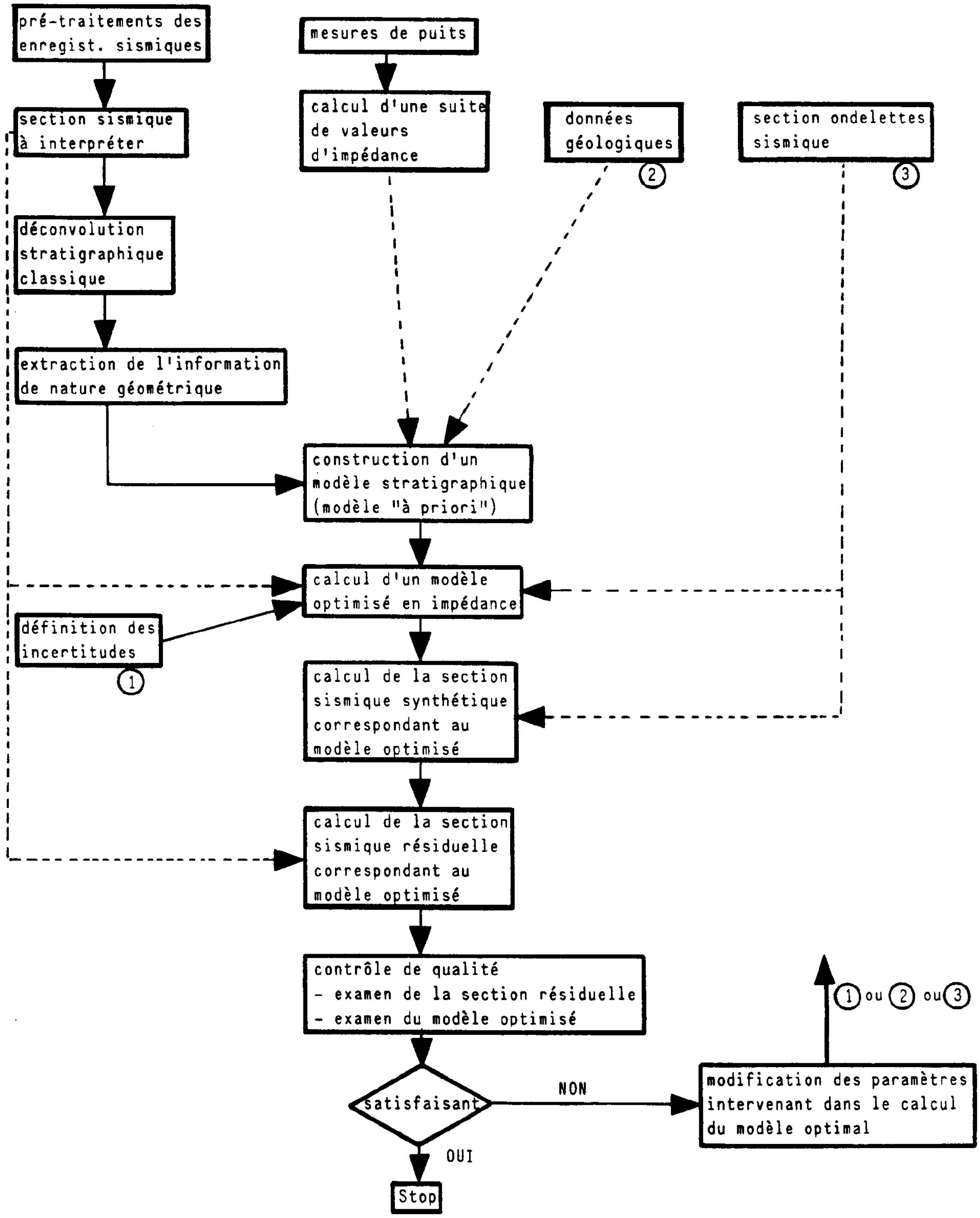
pré-traitements des enregist. sismiques
mesures de puits
section sismique à interpréter
calcul d'une suite de valeurs d'impédance
données géologiques
section ondelettes sismique
déconvolution stratigraphique classique
extraction de l'information de nature géométrique
construction d'un modèle stratigraphique (modèle "à priori")
calcul d'un modèle optimisé en impédance
définition des incertitudes
calcul de la section sismique synthétique correspondant au modèle optimisé
calcul de la section sismique résiduelle correspondant au modèle optimisé
contrôle de qualité
- examen de la section résiduelle
- examen du modèle optimisé
satisfaisant
NON
OUI
Stop
modification des paramètres intervenant dans le calcul du modèle optimal
1 ou 2 ou 3